# EUROPEAN PATENT SPECIFICATION

(11) **EP 2 884 274 B1**
(45) Date of publication and mention of the grant of the patent: **15.03.2017**
(21) Application number: 13196995.8
(22) Date of filing: 12.12.2013
(51) Int. Cl.: G01N 31/22, G01N 21/78

(54) **Colorimetric gas sensing layer, system, and method of making the same**
Kolorimetrische Gassensorschicht, System und Verfahren zu seiner Herstellung
Couche de détection colorimétrique de gaz, système et procédé de fabrication de celui-ci

(43) Date of publication of application: 17.06.2015
(73) Proprietor: Honeywell International Inc., Morris Plains, NJ 07950 (US)
(72) Inventor: Serban, Bogdan Catalin, 60000 Bucharest (RO); Brezeanu, Mihai, 061397 Bucharest (RO); Cobianu, Cornel P., 051434 Bucharest (RO); Buiu, Octavian, Bucharest (RO); Mihaila, Mihai N., 023555 Bucharest (RO); Diaconu, Cristian, 020273 Bucharest (RO)
(74) Representative: Houghton, Mark Phillip

(56) References cited:
- EP-A1- 1 120 648
- EP-A2- 0 348 826
- WO-A1-97/05482
- WO-A1-2011/081939

## Description

### BACKGROUND

Hydrogen sulfide (H₂S) is a flammable, irritating, corrosive, typically bad-smelling and extremely toxic gas. Toxicity of hydrogen sulfide can be comparable with hydrogen cyanide, which is considered as a broad-spectrum poison. Hydrogen sulfide can affect different parts and systems such as skin, eyes and throat in the human body, depress the nervous system and eventually cause death. Hydrogen sulfide occurs naturally in the environment, but ultra-low levels (e.g., less than 1 part per million (ppm)) can be tolerated during a time of about 8 hours per day, because the human body can possess a number of enzymes that are able to perform the conversion through oxidation of hydrogen sulfide to sulphate.

However, it is important to continually sense hydrogen sulfide to provide safeguards for the employees who work in industries such as the petrochemical and fuel refinery where hydrogen sulfide exists. The detection of hydrogen sulfide can also be beneficial for the biomedical field, especially for determination of H₂S content in mouth air and for diagnosis in dentistry.

WO97/05482 discloses a colorimetric method of detecting thiol or volatile sulphur compounds by bubbling the gas through a colloidal metal sol suspension.

EP1120648 discloses a method of detecting thiol containing compounds by contacting a solid sample to a detecting membrane.

### SUMMARY

The present disclosure is directed toward a colorimetric hydrogen sulphide gas sensing layer, system, and method of making the same as defined in the appended claims. In particular, the present disclosure is directed towards gas sensing layers, methods of forming the gas sensing layers, and a colorimetric gas sensor system. The gas sensing layer of the present invention is defined in claim 1, the method for forming the gas sensing layer in accord with the present invention is defined in claim 7.

### DETAILED DESCRIPTION OF THE DRAWINGS

The embodiments of the present disclosure will be described, by way of example only, by reference to the FIGS. 1-3 of the accompanying drawings in which:
FIG. 1 shows a cross-section of a colorimetric gas sensing layer, in accordance with at least one example.
FIG. 2 shows a flow diagram for a method, in accordance with at least one example of the present disclosure.
FIG. 3 shows a colorimetric gas sensor system, in accordance with at least one example.

### DETAILED DESCRIPTION

The present disclosure relates to hydrogen sulphide detectors, especially for detecting toxic gases, the detectors having a material that reacts with hydrogen sulphide (hereinafter referred to as a "target gas"). The reaction causes a change in the radiation absorption of the material, evidenced by a change in color in the visible spectrum. The present disclosure is directed toward a colorimetric gas sensing layer, system, and method of making the same. The colorimetric gas sensing layer includes a substrate and a sensing material as defined in claim 1.

Previous approaches have incorporated semiconductor oxides such as tin dioxide-based materials such as pure tin dioxide, copper oxide-tin dioxide, and tin dioxide-silver oxide have been used in gas detectors to sense hydrogen sulfide. However, previous approaches can provide sufficient sensitivity generally at elevated temperatures (e.g., greater than 180 degrees Celsius (°C), where irreversible reactions can take place between the target gas and the sensing layer, which can affect the long term stability of the gas detector. The gas detectors of the previous approaches can also be vulnerable to moisture, thus requiring a hydrophobic filter.

The colorimetric gas sensing layer, systems, and methods of the present disclosure can provide various advantages over the previous approaches.
For example, the sensing material of the colorimetric gas sensing layer can include two elements, which can reduce the complexity and manufacturing costs of the colorimetric gas sensing layer. The colorimetric gas sensing layer is environmentally friendly and biodegradable and the reaction with the target gas ( hydrogen sulfide) is based on a single chemical reaction. Further, the performance of the colorimetric gas sensing layer of the present disclosure can minimize adverse effects due to relative humidity changes, as the adsorbed water does not react with the gas sensing layer and does not change the color of the gas sensing layer. Additionally, the colorimetric gas sensing layer of the present disclosure does not have cross-sensitivity with other gases, as the only reaction of the gas sensing layer is one between a metal cation being ferrous (II) or cuprous (II)) and hydrogen sulfide.

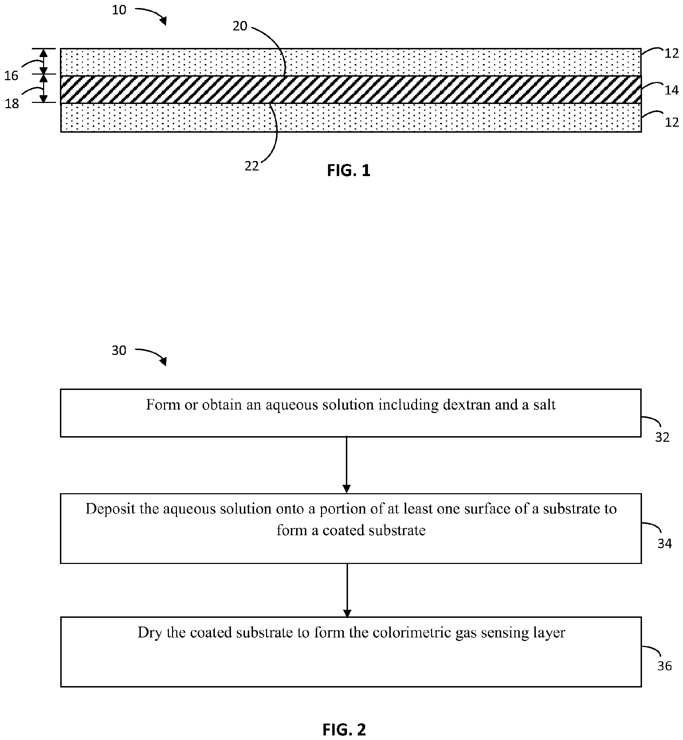

FIG. 1 illustrates a cross-section of a colorimetric gas sensing layer 10, in accordance with at least one example. As shown in FIG. 1, the colorimetric gas sensing layer 10 includes a substrate 14 and a sensing material 12 (collectively referred to herein as "sensing layer 12"). The substrate 14 can have a top surface 20 and a bottom surface 22. The sensing material 12 can be deposited onto the top surface 20 and onto the bottom surface 22. FIG. 1 illustrates an example where the top and bottom surfaces 20, 22 of the substrate 14 include the sensing material. In an example, the sensing material can be deposited along one surface of the substrate 14.

As shown in FIG. 1, the sensing material 12 extends along a cross-section of the substrate 14. In an example, the sensing material 12 can be positioned at distinct regions along the surfaces 20 and 22. That is, the sensing material 12 can be deposited along discrete separate locations along the top and bottom surfaces 20 and 22 of the substrate 14.

In an example, the substrate 14 can be formed from a material chosen from paper, cellulose, ethyl cellulose, methyl cellulose, oxypropyl cellulose. In one example, the substrate 14 is cellulose. The substrate 14 can have a thickness 18 of about 200 micrometers to about 800 micrometers. The sensing material 12 can have a thickness 16 of about 1 micrometer to about 50 micrometers. However, other thicknesses of the substrate and sensing material can be used. A thickness 16 of the sensing material 12 below 1 micrometer can reduce the number of active sensing sites, and low hydrogen sulfide levels can saturate the sensing material 12. Having the thickness 16 of the sensing material 12 greater than 50 micrometers can allow for the sensing material 12 to consume a large amount without indication of consumption. The sensing material 12 of the present disclosure can sense the target gas within the range of zero parts per million (ppm) to tens of parts per million (e.g., 1 ppm, 2 ppm, 3 ppm, 4 ppm, 5 ppm, 6 ppm, 7 ppm, 8 ppm, 9ppm, 10 ppm, 20, ppm, and 30 ppm, etc.).

The sensing material of the present invention comprise dextran and a salt. The dextran can have a molecular weight within a range of about 10,000 Daltons to about 2,000,000 Daltons. In an example, the dextran can have a molecular weight within a range of about 15,000 Daltons to about 1,000,000 Daltons, such as 500,000 Daltons. However, it is contemplated that dextran having a molecular weight above 2,000,000 Daltons and below 10,000 can be used.

The salt is chosen from one of an iron (II) salt, and copper (II) salt. In an example, the iron (II) salt can be chosen from ferrous chloride, ferrous acetate, and iron gluconate. In an example, the copper (II) salt can be chosen from copper chloride, copper acetate, copper gluconate.

In the present invention the sensing material 12 includes dextran, for example within a range of about 40 weight percent to about 80 weight percent, the weight percent based on a total weight of the sensing material 12 (e.g., a total weight of the dextran and the salt). In an example, the sensing material 12 can include dextran within a range of about 50 weight percent to about 70 weight percent, such as about 60 weight percent.

In an example, the sensing material 12 can include the salt within a range of about 60 weight percent to about 20 weight percent, the weight percent based on a total weight of the sensing material 12. In an example, the sensing material 12 can include the salt within a range of about 50 weight percent to about 30 weight percent, such as about 40 weight percent.

As discussed herein, the sensing material 12 can change color on the visible spectrum when in contact with a target gas, such as hydrogen sulfide (H₂S). The H₂S detection by the sensing material 12 occurs as a result of the reaction between a metallic cation (e.g., Fe²⁺ and Cu²⁺) and H₂S, which produces a metal sulfide that is a black precipitate. Due to this black precipitate, the sensing material 12 can change its color, which can be "seen" by an optical detector.

In one embodiment of the present invention the sensing material 12 is made of dextran and iron (II) salt. In this case, a ferrous cation (Fe⁺²) can react with H₂S yielding iron (II) sulfide (FeS), which is a black precipitate. The chemical reaction can be represented by the following: : Fe⁺² + H₂S =FeS+2H⁺. In another embodiment of the invention, the sensing material 12 is made of dextran and copper (II) salt. In this case, a cuprous cation (Cu⁺²) can react with H₂S yielding copper (II) sulfide (CuS), which is a black precipitate. The chemical reaction can be represented by the following: Cu⁺² + H₂S =CuS+2H⁺.

In an example, the criteria for selecting the salt was a product of concentrations of the metal cations and sulfur anions should be greater than the solubility product (Kps) for the metal sulfide, which is formed. For example, in order to get efficient sensitivity at low hydrogen sulfide concentrations, metal salts with lower Kps values were evaluated. For example, iron (II) sulfide has a Kps value of 6 x 10⁻¹⁹ and copper (II) sulfide has a Kps value of 6 x 10⁻³⁷.

In an example, an additional factor for selecting the salt is that the metal sulfide formed has a dark color (e.g., black, blue, purple) to contrast with the substrate 14, which can generally have a white color. For example, iron (II) sulfide and copper (II) sulfide both have a dark color, which can assist in detecting the presence of hydrogen sulfide.

Iron sulfide (FeS) and copper sulfide (CuS) can be formed when hydrogen sulfide (H₂S) combines with the metal ions. Iron sulfide is a black compound and can change the color of the sensing material 12. For example, the color change can be observed when a target gas (e.g., hydrogen sulfide) contacts the sensing material 12 including dextran and the salt (e.g., iron (II) salt and cupper (II) salt. The amount of the color change is proportional to the concentration of the target gas in the atmosphere. For example, as the concentration of the target gas increases the color change of the sensing material 12 also increases (e.g., becomes darker).

Dextran having a molecular weight below 1,000,000 Daltons is soluble in water and can form a clear and stable solution, where a stable solution includes a solution where no phase separation exists. A stable solution is assists for deposition on the substrate 14. Dextran can provide increased adhesion to the substrate, increased mechanical resistance of the substrate 14 and sensing material 12, increased compatibility between metallic cations and dextran. The sensing material 12 including dextran and an iron (II) salt or a copper (II) salt is water soluble and assures adherence of the sensing material 12 to the substrate 14 during sensing material 12 deposition. The sensing material 12 can preserve its selectivity to H₂S detection in the presence of ambient humidity, as the detection reaction from above is not affected by humidity. Both iron (II) salt and copper (II) salt are used within the sensing material 12 due to the color change occurred in the presence of H₂S.

FIG. 2 shows a flow diagram for a method 30, in accordance with at least one example of the present disclosure. At step 32, method 30 includes forming or obtaining an aqueous solution including dextran an a salt. For example, forming or obtaining the aqueous solution can include dissolving dextran and the salt into deionized water (e.g. mass of deionized water is about five times higher than that of dextran). In an example, the aqueous solution can include about 13.3 weight percent to about 16.0 weight percent of the dextran and about 4 weight percent to about 20 weight percent of the salt, the weight percent based on a total weight of the aqueous solution. In an example, the aqueous solution includes 14.2 weight percent to about 15.5 weight percent of dextran, such as 15 weight percent and includes about 14.2 weight percent to about 6.6 weight percent of the salt, such as 10 weight percent.

As discussed herein, the molecular weight of the dextran can be within a range of about 10,000 Daltons to about 2,000,000 Daltons. In the present invention the salt is chosen from one of an iron (II) salt and copper (II) salt. In an example, the iron (II) salt can be chosen from ferrous chloride, ferrous acetate, and iron gluconate. In an example, the copper (II) salt can be chosen from copper chloride, copper acetate, and copper gluconate.

The method 30, at step 34 can include depositing the aqueous solution onto a portion of at least one surface of a substrate to form a coated substrate. In one example, the substrate can be passed through a bath containing the aqueous solution. In an example, the aqueous solution can be deposited drop-wise, by a dispenser, or direct printing tool.

The method 30, at step 36 can include drying the coated substrate to form the colorimetric gas sensing layer. In an example, the substrate can be placed in an oven and dried at 50 degrees Celsius (°C). In an example, the coated substrate can be dried via laser annealing, as discussed herein.

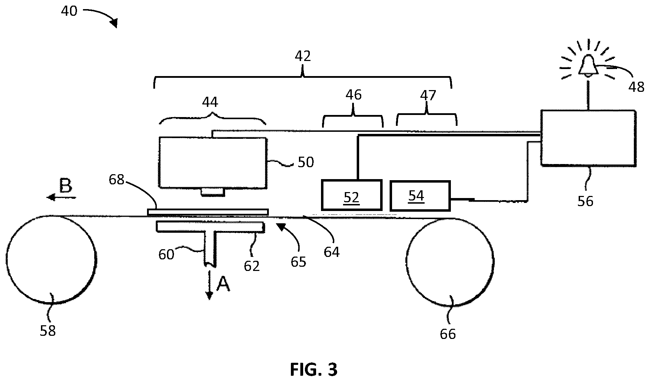

FIG. 3 illustrates a colorimetric gas sensor system 40, in accordance with at least one example. The colorimetric gas sensor system 40 can be used for detecting and measuring a presence of a target gas in an atmosphere. The colorimetric gas sensor system 40 can include a gas sensing station 42, a detector 50, and a processor 56.

The gas sensing station 42 can be configured to bring a sample of the atmosphere into contact with a colorimetric gas sensing layer 65 including a substrate 64 and a sensing material 68, the sensing material 68 including dextran and a salt. For example, at location 44 there can be a plenum chamber 62, where gas from an atmosphere being monitored may be drawn through or past the sending material 68 at location 44 within the gas detection station 42. The plenum chamber 62 can be connected to a source of reduced pressure, e.g. a pump (not shown), via a line 60, where gas from the atmosphere can be drawn through the colorimetric gas sensing layer 65 in the direction of the arrow "A". In an example, the pump can be controlled by the processor 56.

In an example, the colorimetric gas sensing system 40 can include a printer 54 provided at location 47 and a laser 52 provided at location 46. The printer 54 can be configured to apply the sensing material 68 onto the substrate 64. The laser 52 can be configured to provide a thermal treatment to dry the sensing material 68. For example, the thermal treatment can be a laser annealing of the substrate 64 and sensing material 68.

In an example, the colorimetric gas sensing system 40 can include two spools 66 and 58. Spool 66 can include the substrate 64 without the sensing material 68. In an example, as the substrate 64 is moved between spools 66 and 58 in the direction of arrow "B", the printer 54 can deposit the sensing material 68 onto the substrate 64. After a predetermined time or if an unsafe amount of the target gas has been detected, the processor 56 can send a signal to move the substrate 64 such that the "used" substrate (e.g., a substrate having detected the target gas) is wound onto spool 58.

In an example, the detector 50 at location 44 can be configured to generate a signal corresponding to a change in wavelength of light reflected by the colorimetric gas sensing layer 65. For example, the detector 50 can measure the change in the wavelength of light reflected by the colorimetric gas sensing layer 65.

In an example, the detector 50 can be a photosensitive cell located behind suitable filters that restrict the wavelengths reaching the photosensitive cell that have transmitted from the colorimetric gas sensing layer 65 after the colorimetric gas sensing layer 65 has reacted with the target gas. In an example, the photosensitive cell can be a still or video camera that forms an image of the colorimetric gas sensing layer 65 that has passed through the filters either in color or in a greyscale. The brightness of the pixels forming the image of the colorimetric gas sensing layer 65 can be used to assess the color change, which can be recorded by the camera.

Once a sample gas from the atmosphere being monitored has been drawn through or past the colorimetric gas sensing layer 65 at location **44**, the wavelengths transmitted by the colorimetric gas sensing layer 65 is measured by the detector 50. Again a signal is generated that is fed to the processor 56. The processor 56, based on the signal from the detector 50, can calculate an amount of target gas in the sample of the atmosphere. The processor 56 can be configured to compare the amount of target gas calculated with a threshold value. The processor 56 can initiate an alarm 48 if the amount is greater than the threshold value.

In use, the colorimetric gas sensor system can be used to apply the sensing material 68 to the substrate 64 via printer 54. Once the sensing material 68 has been deposited by the printer 54 at location 47, the substrate 64 can advanced to location 46 such that the sensing material 68 is positioned opposite the laser 52. The laser can apply a thermal treatment to dry the sensing material 68. Once the sensing material 68 is dry, the substrate can be advanced form location 46 to location 44 such that the sensing material 68 is positioned opposite the detector 50.

The detector 50 can monitor the wavelength of light reflected by the colorimetric gas sensing layer 68 and determine a change in wavelength. A signal can be sent by the detector 50 to the processor **56** corresponding to a change in the wavelength of light reflected by the colorimetric gas sensing layer 68. The processor 56 can receive the signal and calculate an amount of target gas in the sample of the atmosphere. The processor 56 can compare the amount of target gas calculated with a threshold value, and initiate the alarm 48 if the amount is greater than the threshold value.

### Additional Notes & Examples

Examples of the present disclosure provides colorimetric gas sensing layers, method of forming the colorimetric gas sensing layers, and a colorimetric gas sensor system for detecting an measuring a presence of a target gas in an atmosphere.

In Example 1, includes subject matter directed to a colorimetric gas sensing layer. The colorimetric gas sensing layer includes a substrate having a top surface and a bottom surface, and a sensing material deposited on at least one of the top surface and the bottom surface, the sensing layer comprising dextran and a salt.

In Example 2, the subject matter of Example 1 can be optionally configured such that the salt is chosen from one of an iron (II) salt and a copper (II) salt.

In Example 3, the subject matter of any one or any combination of Examples 2 or 3 is optionally configured such that the iron (II) salt is chosen from ferrous chloride, ferrous acetate, and iron gluconate.

In Example 4, the subject matter of any one or any combination of Examples 1 through 3 is optionally configured such that the copper (II) salt is chosen from copper chloride, copper acetate, and copper gluconate.

In Example 5, the subject matter of any one or any combination of Examples 1 through 4 is optionally configured such that a molecular weight of the dextran is within a range of about 10,000 Daltons to about 2,000,000 Daltons.

In Example 6, the subject matter of any one or any combination of Examples 1 through 5 is optionally configured such that the sensing material includes dextran within a range of about 40 weight percent to about 80 weight percent, based on a total weight of the sensing material.

In Example 7, the subject matter of any one or any combination of Examples 1 through 6 is optionally configured such that the sensing material includes the salt within a range of about 60 weight percent to about 20 weight percent, based on a total weight of the sensing material.

Example 8 includes subject matter directed to a method of forming a colorimetric gas sensing layer. The method includes forming or obtaining an aqueous solution including dextran and a salt, depositing the aqueous solution onto at least one surface of a substrate to form a coated substrate, and drying the coated substrate to form the colorimetric gas sensing layer.

In Example 9, the subject matter of any one or any combination of Examples 1 through 8 is optionally configured such that the aqueous solution includes about 13.3 weight percent to about 16 weight percent of dextran and about 4 weight percent to about 20 weight percent of the salt, the weight percent based on a total weight of the aqueous solution.

In Example 10, the subject matter of Examples 1 through 9 is configured such that the salt is chosen form one of an iron (II) salt and a copper (II) salt.

In Example 11, the subject matter of any one or any combination of Examples 1 through 10 is optionally configured such that a molecular weight of the dextran is within a range of about 10,000 Daltons to about 2,000,000 Daltons.

Example 12 includes subject matter directed to a colorimetric gas sensor system for detecting and measuring a presence of a target gas in an atmosphere. The a colorimetric gas sensor system includes a gas sensing station configured to bring a sample of the atmosphere into contact with a colorimetric gas sensing layer, the colorimetric gas sensing layer having a substrate and a sensing material deposited at a location on at least one surface of the substrate, the sensing material comprising dextran and a salt, a detector configured to generate a signal corresponding to a change in wavelength of light reflected by the colorimetric gas sensing layer, and a processor configured to process the signal from the detector and calculate an amount of target gas in the sample of the atmosphere.

In Example 13, the subject matter of any one or any combination of Examples 1 through 12 is optionally configured to include a printer configured to deposit the sensing material onto the substrate within the gas sensing station

In Example 14, the subject matter of any one or any combination of Examples 1 through 13 is optionally configured to include a laser configured to apply a thermal treatment to dry the sensing material deposited onto the substrate via the printer.

In Example 15, the subject matter of any one or any combination of Examples 1 through 14 is optionally configured such that the processor is configured to compare the amount of the target gas calculated by the processor with a threshold value, and initiates an alarm if the amount is greater than the threshold value

## Claims

1. A colorimetric hydrogen sulfide (10) gas sensing layer, comprising:
a substrate (14) having a top surface and a bottom surface (20, 22); and
a sensing material (12) deposited on at least one of the top surface and the bottom surface (20, 22), the sensing material (12) comprising dextran and a salt chosen from one of an iron (II) salt and a copper (II) salt.

2. The colorimetric gas sensing layer of claim 1, wherein the iron (II) salt is chosen from iron (II) chloride, iron (II) acetate, and iron (II) gluconate.

3. The colorimetric gas sensing layer of claim 1, wherein the copper (II) salt is chosen from copper chloride, copper acetate, and copper gluconate.

4. The colorimetric gas sensing layer of any one of claims 1 to 3, wherein a molecular weight of the dextran is within a range of about 10,000 Daltons to about 2,000,000 Daltons.

5. The colorimetric gas sensing layer of any one of claims 1 to 4, wherein the sensing material (12) includes dextran within a range of about 40 weight percent to about 80 weight percent, based on a total weight of the sensing material (12).

6. The colorimetric gas sensing layer of any one of claims 1 to 5, wherein the sensing material (12) includes the salt within a range of about 60 weight percent to about 20 weight percent, based on a total weight of the sensing material (12).

7. A method of forming a colorimetric gas sensing layer (10) for sensing hydrogen sulfide gas, the method comprising:
forming or obtaining an aqueous solution including dextran and a salt chosen from one of an iron (II) salt and a copper (II) salt;
depositing the aqueous solution onto at least one surface of a substrate (14) to form a coated substrate (14); and
drying the coated substrate (14) to form the colorimetric gas sensing layer (10) to provide the sensing of hydrogen sulfide gas by the reaction between iron (II) or copper (II) cations and hydrogen sulfide gas causing the sensing material layer (10) to change color.

8. The method of claim 7, wherein the aqueous solution includes about 13.3 weight percent to about 16 weight percent of dextran and about 4 weight percent to about 20 weight percent of the salt, the weight percent based on a total weight of the aqueous solution.

9. The method of claim 7 or claim 8, wherein a molecular weight of the dextran is within a range of about 10,000 Daltons to about 2,000,000 Daltons.

10. A colorimetric hydrogen sulphide gas sensor system for detecting and measuring a presence of hydrogen sulfide gas in an atmosphere, the system comprising:
a gas sensing station (44) configured to bring a sample of the atmosphere into contact with a colorimetric gas sensing layer (65) according to any one of claims 1 to 6 ;
a detector (50) configured to generate a signal corresponding to a change in wavelength of light reflected by the colorimetric gas sensing layer (65); and
a processor (56) configured to process the signal from the detector (50) and calculate an amount of hydrogen sulfide gas in the sample of the atmosphere.

11. The colorimetric gas sensor system of claim 10, comprising:
a printer (54) configured to deposit the sensing material (68) onto the substrate (64) within the gas sensing station (44).

12. The colorimetric gas sensor system of claim 10 or claim 11, comprising:
a laser (52) configured to apply a thermal treatment to dry the sensing material (68) deposited onto the substrate (64) via the printer (54).

13. The colorimetric gas sensor system of one of claims 10 to 12, wherein the processor (56) is configured to compare the amount of the hydrogen sulfide gas calculated by the processor (56) with a threshold value, and initiates an alarm if the amount is greater than the threshold value.

## Patentansprüche

1. Kolorimetrische Wasserstoffsulfid(10)-Gaserfassungsschicht, die Folgendes umfasst:
ein Substrat (14) mit einer oberen Oberfläche und einer unteren Oberfläche (20, 22); und
ein Erfassungsmaterial (12), das auf der oberen Oberfläche und/oder der unteren Oberfläche (20, 22) aufgebracht ist, wobei das Erfassungsmaterial (12) Dextran und ein Salz, das aus einem von einem Eisen(II)-Salz und einem Kupfer(II)-Salz gewählt ist, umfasst.

2. Kolorimetrische Gaserfassungsschicht nach Anspruch 1, wobei das Eisen(II)-Salz aus Eisen(II)-chlorid, Eisen(II)-acetat und Eisen(II)-gluconat gewählt ist.

3. Kolorimetrische Gaserfassungsschicht nach Anspruch 1, wobei das Kupfer(II)-Salz aus Kupferchlorid, Kupferacetat und Kupfergluconat gewählt ist.

4. Kolorimetrische Gaserfassungsschicht nach einem der Ansprüche 1 bis 3, wobei ein Molekülgewicht des Dextrans im Bereich von etwa 10000 Dalton bis etwa 2000000 Dalton liegt.

5. Kolorimetrische Gaserfassungsschicht nach einem der Ansprüche 1 bis 4, wobei das Erfassungsmaterial (12) Dextran in einem Bereich von etwa 40 Gewichtsprozent bis etwa 80 Gewichtsprozent, basierend auf einem Gesamtgewicht des Erfassungsmaterials (12), umfasst.

6. Kolorimetrische Gaserfassungsschicht nach einem der Ansprüche 1 bis 5, wobei das Erfassungsmaterial (12) das Salz in einem Bereich von etwa 60 Gewichtsprozent bis etwa 20 Gewichtsprozent, basierend auf dem Gesamtgewicht des Erfassungsmaterials (12), umfasst.

7. Verfahren zum Bilden einer kolorimetrischen Gaserfassungsschicht (10) zum Erfassen von Wasserstoffsulfidgas, wobei das Verfahren Folgendes umfasst:
Bilden oder Erhalten einer wässrigen Lösung, die Dextran und ein Salz, das aus einem von einem Eisen(II)-Salz und einem Kupfer(II)-Salz gewählt ist, beinhaltet;
Aufbringen der wässrigen Lösung auf wenigstens eine Oberfläche eines Substrats (14), um ein bedecktes Substrat (14) zu bilden; und
Trocknen des bedeckten Substrats (14), um die kolorimetrische Gaserfassungsschicht (10) zu bilden, um die Erfassung von Wasserstoffsulfidgas durch die Reaktion zwischen Eisen(II)- oder Kupfer(II)-Kationen und Wasserstoffsulfidgas bereitzustellen, wodurch eine Farbänderung der Erfassungsmaterialschicht (10) verursacht wird.

8. Verfahren nach Anspruch 7, wobei die wässrige Lösung etwa 13,3 Gewichtsprozent bis etwa 16 Gewichtsprozent von Dextran und etwa 4 Gewichtsprozent bis etwa 20 Gewichtsprozent des Salzes, basierend auf dem Gesamtgewicht der wässrigen Lösung, beinhaltet.

9. Verfahren nach Anspruch 7 oder 8, wobei ein Molekülgewicht des Dextrans in einem Bereich von etwa 10000 Dalton bis etwa 2000000 Dalton liegt.

10. Kolorimetrisches Wasserstoffsulfidgassensorsystem zum Detektieren und Messen einer Anwesenheit von Wasserstoffsulfidgas in einer Atmosphäre, wobei das System Folgendes umfasst:
eine Gaserfassungsstation (44), die dazu konfiguriert ist, eine Probe der Atmosphäre in Kontakt mit einer kolorimetrischen Gaserfassungsschicht (65) nach einem der Ansprüche 1 bis 6 zu bringen;
einen Detektor (50), der dazu konfiguriert ist, ein Signal zu erzeugen, das einer Wellenlängenänderung von Licht, das von der kolorimetrischen Gaserfassungsschicht (65) reflektiert wird, entspricht; und
einen Prozessor (56), der dazu konfiguriert ist, das Signal von dem Detektor (50) zu verarbeiten und eine Menge an Wasserstoffsulfidgas in der Probe der Atmosphäre zu berechnen.

11. Kolorimetrisches Gassensorsystem nach Anspruch 10, das Folgendes umfasst:
einen Drucker (54), der dazu konfiguriert ist, das Erfassungsmaterial (68) innerhalb der Gaserfassungsstation (44) auf das Substrat (64) aufzubringen.

12. Kolorimetrisches Gassensorsystem nach Anspruch 10 oder 11, das Folgendes umfasst:
einen Laser (52), der dazu konfiguriert ist, eine Wärmebehandlung einzusetzen, um das Erfassungsmaterial (68), das mittels des Druckers (54) auf das Substrat (64) aufgebracht wurde, zu trocknen.

13. Kolorimetrisches Gassensorsystem nach einem der Ansprüche 10 bis 12, wobei der Prozessor (56) dazu konfiguriert ist, die von dem Prozessor (56) berechnete Menge an Wasserstoffsulfidgas mit einem Schwellenwert zu vergleichen, und einen Alarm auslöst, falls die Menge größer als der Schwellenwert ist.

## Revendications

1. Couche de détection colorimétrique de sulfure d'hydrogène gazeux (10), comprenant :
un substrat (14) comportant une surface supérieure et une surface inférieure (20, 22) ; et
un matériau de détection (12) déposé sur au moins l'une de la surface supérieure et de la surface inférieure (20, 22), le matériau de détection (12) comprenant du dextrane et un sel sélectionné parmi l'un d'un sel de fer (II) et d'un sel de cuivre (II).

2. Couche de détection colorimétrique de gaz selon la revendication 1, dans laquelle le sel de fer (II) est sélectionné parmi le chlorure du fer (II), l'acétate de fer (II), et le gluconate de fer (II).

3. Couche de détection colorimétrique de gaz selon la revendication 1, dans laquelle le sel de cuivre (II) est sélectionné parmi le chlorure de cuivre, l'acétate de cuivre, et le gluconate de cuivre.

4. Couche de détection colorimétrique de gaz selon l'une quelconque des revendications 1 à 3, dans laquelle une masse moléculaire du dextrane est d'environ 10 000 daltons à environ 2 000 000 daltons.

5. Couche de détection colorimétrique de gaz selon l'une quelconque des revendications 1 à 4, dans laquelle le matériau de détection (12) contient le dextrane dans une quantité d'environ 40 % en poids à environ 80 % en poids, relativement à un poids total du matériau de détection (12).

6. Couche de détection colorimétrique de gaz selon l'une quelconque des revendications 1 à 5, dans laquelle le matériau de détection (12) contient le sel dans une quantité d'environ 60 % en poids à environ 20 % en poids, relativement à un poids total du matériau de détection (12).

7. Procédé de formation d'une couche de détection colorimétrique de gaz (10) pour la détection de sulfure d'hydrogène gazeux, le procédé comprenant :
la formation ou l'obtention d'une solution aqueuse contenant du dextrane et un sel sélectionné parmi un sel de fer (II) et un sel de cuivre (II) ;
le dépôt de la solution aqueuse sur au moins une surface d'un substrat (14) pour former un substrat revêtu (14) ; et
le séchage du substrat revêtu (14) pour former la couche de détection colorimétrique de gaz (10) afin d'effectuer la détection de sulfure d'hydrogène gazeux par réaction entre les cations de fer (II) ou de cuivre (II) et le sulfure d'hydrogène gazeux, en provoquant un changement de couleur de la couche de matériau de détection (10).

8. Procédé selon la revendication 7, dans lequel la solution aqueuse contient d'environ 13,3 % en poids à environ 16 % en poids de dextrane et d'environ 4 % en poids à environ 20 % en poids du sel, le pourcentage pondéral étant exprimé relativement à un poids total de la solution aqueuse.

9. Procédé selon la revendication 7 ou la revendication 8, dans lequel une masse moléculaire du dextrane est d'environ 10 000 daltons à environ 2 000 000 daltons.

10. Système de détection colorimétrique de sulfure d'hydrogène gazeux conçu pour détecter et mesurer une présence de sulfure d'hydrogène gazeux dans une atmosphère, le système comprenant :
une station de détection de gaz (44) configurée pour mettre un échantillon de l'atmosphère en contact avec une couche de détection colorimétrique de gaz (65) selon l'une quelconque des revendications 1 à 6 ;
un détecteur (50) configuré pour générer un signal correspondant à un changement de longueur d'onde de la lumière reflétée par la couche de détection colorimétrique de gaz (65) ; et
un processeur (56) configuré pour traiter le signal provenant du détecteur (50) et calculer une quantité de sulfure d'hydrogène gazeux dans l'échantillon de l'atmosphère.

11. Système de détection colorimétrique de gaz selon la revendication 10, comprenant :
une imprimante (54) configurée pour déposer le matériau de détection (68) sur le substrat (64) dans la station de détection de gaz (44).

12. Système de détection colorimétrique de gaz selon la revendication 10 ou la revendication 11, comprenant :
un laser (52) configuré pour appliquer un traitement thermique pour sécher le matériau de détection (68) déposé sur le substrat (64) par l'intermédiaire de l'imprimante (54).

13. Système de détection colorimétrique de gaz selon l'une des revendications 10 à 12, dans lequel le processeur (56) est configuré pour comparer la quantité du sulfure d'hydrogène gazeux calculée par le processeur (56) à une valeur de seuil, et déclenche une alarme si la quantité est supérieure à la valeur de seuil.
